# EUROPEAN PATENT APPLICATION

(11) **EP 4 831 305 A1**
(43) Date of publication of application: **28.10.2026**
(21) Application number: 24907154.9
(22) Date of filing: 04.12.2024
(51) Int. Cl.: C21B 13/02, C21B 11/02, C22B 5/12

(54) **REDUCED IRON PRODUCTION METHOD AND REDUCED IRON PRODUCTION DEVICE**

(30) Priority: 18.12.2023 JP 2023213399
(71) Applicant: Nippon Steel Corporation, Tokyo 100-8071 (JP)
(72) Inventor: MIZUTANI Moritoshi, Tokyo 100-8071 (JP); TOMITA Katsuyuki, Tokyo 100-8071 (JP)
(74) Representative: Vossius & Partner Patentanwälte Rechtsanwälte mbB
(86) International application number: PCT/JP2024/042805
(87) International publication number: WO 2025/134767

(57) **Abstract**

A method of producing reduced iron includes: an iron oxide charging process of charging an iron oxide raw material into a shaft furnace; a partial combustion process of partially combusting a feed gas with oxygen gas to raise a temperature of the feed gas to 800°C or higher and to generate a reducing gas; and a blowing process of blowing the reducing gas into the shaft furnace, in which, in the blowing process, in a case where a temperature of the reducing gas after the partial combustion process is 800°C or higher and lower than 900°C, a water vapor concentration of the reducing gas is set to 21% by volume or less, in a case where the temperature of the reducing gas after the partial combustion process is 900°C or higher and lower than 1,000°C, the water vapor concentration of the reducing gas is set to 23% by volume or less, and in a case where the temperature of the reducing gas after the partial combustion process is 1,000°C or higher, the water vapor concentration of the reducing gas is set to 24% by volume or less.

## Description

### TECHNICAL FIELD

The present invention relates to a method of producing reduced iron and an apparatus for producing reduced iron.

Priority is claimed on Japanese Patent Application No. 2023-213399, filed December 18, 2023, the content of which is incorporated herein by reference.

### BACKGROUND ART

A method of producing reduced iron using a shaft furnace (shaft furnace operation) is a representative of a direct reduction process of producing reduced iron from an iron oxide raw material, and is widespread mainly in regions (oil-producing countries) where natural gas is available at low cost. Here, an outline of the method of producing reduced iron using a shaft furnace will be described. First, an iron oxide raw material (for example, iron oxide pellets) is charged from an upper part of the shaft furnace, and a reducing gas is blown from a lower part of the shaft furnace. The reducing gas is heated to a predetermined temperature (for example, about 900°C to 950°C) and then blown into the shaft furnace. The reducing gas blown into the shaft furnace reduces the iron oxide raw material in the shaft furnace. Reduced iron is produced by such a direct reduction process. The reduced iron is discharged from the lower part of the shaft furnace and cooled. From a furnace top of the shaft furnace, a top gas (exhaust gas) including hydrogen gas, CO gas, water vapor, and CO₂ gas is discharged. After water vapor is removed from the top gas, hydrogen gas or CO gas in the top gas is reused as a part of a feed gas. In addition, in some cases, the CO₂ gas is removed after the water vapor is removed from the top gas.

The reducing gas used in the shaft furnace (blown into the shaft furnace) is a gas obtained by reforming a feed gas (for example, natural gas, coke oven gas, or the like) containing carbon using water vapor, CO₂ gas, oxygen gas, or the like. However, in a case where the feed gas is reformed inside the shaft furnace, the feed gas may be used as the reducing gas without being reformed. Main components of the reducing gas are hydrogen gas (H₂), CO gas (CO), and CH₄ gas.

By the way, in recent years, in order to further reduce the amount of CO₂ gas emitted, a technique for increasing a concentration of hydrogen gas in a reducing gas has been studied. For example, Patent Document 1 discloses a technique using a reducing gas in which a concentration of hydrogen gas is 70% by volume or more. In the technique disclosed in Patent Document 1, the reducing gas is heated by heat exchange with exhaust gas, heating in a heating furnace, and partial combustion of the reducing gas using oxygen gas.

### Citation List

### Patent Document

Patent Document 1: PCT International Publication No. WO2022/169392

### SUMMARY OF INVENTION

### Technical Problem

Incidentally, water (water vapor) is generated in a case where hydrogen gas is partially combusted. Since water vapor generally delays the reduction reaction of the iron oxide raw material in the shaft furnace, a reduction degree (productivity) of the reduced iron is reduced by the generation of water vapor.

The present invention has been made in view of the above problem. An object of the present invention is to provide a novel and improved method of producing reduced iron capable of producing reduced iron having a high reduction degree even in a case where hydrogen gas is partially combusted, and an apparatus for producing reduced iron suitable for the production method.

### Solution to problem

The gist of the present invention is as follows.
[1] A method of producing reduced iron according to an aspect of the present invention includes: an iron oxide charging process of charging an iron oxide raw material into a shaft furnace; a partial combustion process of partially combusting a feed gas with oxygen gas to raise a temperature of the feed gas to 800°C or higher and to generate a reducing gas; and a blowing process of blowing the reducing gas into the shaft furnace, in which, in the blowing process, in a case where a temperature of the reducing gas after the partial combustion process is 800°C or higher and lower than 900°C, a water vapor concentration of the reducing gas is set to 21% by volume or less, in a case where the temperature of the reducing gas after the partial combustion process is 900°C or higher and lower than 1,000°C, the water vapor concentration of the reducing gas is set to 23% by volume or less, and in a case where the temperature of the reducing gas after the partial combustion process is 1,000°C or higher, the water vapor concentration of the reducing gas is set to 24% by volume or less.
[2] In the method of producing reduced iron according to [1], in the blowing process, in a case where the temperature of the reducing gas after the partial combustion process is 800°C or higher and lower than 900°C, the water vapor concentration of the reducing gas may be set to 10% by volume or less, in a case where the temperature of the reducing gas after the partial combustion process is 900°C or higher and lower than 1,000°C, the water vapor concentration of the reducing gas may be set to 17% by volume or less, and in a case where the temperature of the reducing gas after the partial combustion process is 1,000°C or higher, the water vapor concentration of the reducing gas may be set to 19% by volume or less.
[3] In the method of producing reduced iron according to [1], the feed gas may contain hydrogen gas as a main component.
[4] In the method of producing reduced iron according to [2], the feed gas may contain hydrogen gas as a main component.
[5] In the method of producing reduced iron according to any one of [1] to [4], in the partial combustion process, the feed gas and the oxygen gas may be introduced into a heating furnace, and the feed gas may be partially combusted in the heating furnace.
[6] In the method of producing reduced iron according to [3] or [4], in the partial combustion process, the feed gas at 100°C or lower may be partially combusted with the oxygen gas to raise the temperature of the feed gas to 897°C or higher.
[7] In the method of producing reduced iron according to [3] or [4], in the partial combustion process, the feed gas at 100°C or lower may be partially combusted with the oxygen gas to raise the temperature of the feed gas to 969°C or higher.
[8] In the method of producing reduced iron according to any one of [1] to [4], the method may include a preheating process of preheating the feed gas, in which in the partial combustion process, the preheated feed gas may be partially combusted with the oxygen gas.
[9] In the method of producing reduced iron according to [8], in the preheating process, the feed gas may be preheated using sensible heat contained in the exhaust gas of the shaft furnace.
[10] In the method of producing reduced iron according to [9], the method may include a circulation process of introducing hydrogen gas obtained by dehydrating the exhaust gas after the preheating process into a heating furnace.
[11] A method of producing reduced iron according to another aspect of the present invention includes: an iron oxide charging process of charging an iron oxide raw material into a shaft furnace; a partial combustion process of partially combusting a feed gas with oxygen gas to raise a temperature of the feed gas to 800°C or higher and to generate a reducing gas; and a blowing process of blowing the reducing gas into the shaft furnace, in which a relationship between a water vapor concentration, which is a concentration of water vapor in terms of a volume ratio in hydrogen gas and the water vapor in the reducing gas, and a reduction degree of reduced iron is obtained for each temperature of the reducing gas, and the water vapor concentration is controlled according to the reduction degree as a target and the temperature of the reducing gas based on the relationship, or the temperature of the reducing gas is controlled according to the reduction degree as a target and the water vapor concentration based on the relationship.
[12] An apparatus for producing reduced iron according to another aspect of the invention is an apparatus for producing reduced iron using the method of producing reduced iron according to [6], and includes: a heating furnace connected to a pipe and configured to heat and partially combust the introduced feed gas and the oxygen gas to obtain the reducing gas; and the shaft furnace into which the reducing gas obtained in the heating furnace is blown, in which the heating furnace is configured such that the feed gas is directly supplied from a feed gas supply source through the pipe.

### Advantageous Effects of Invention

According to the aspects of the present invention, it is possible to provide a method of producing reduced iron capable of producing reduced iron having a high reduction degree even in a case where hydrogen gas is partially combusted, and an apparatus for producing reduced iron suitable for the production method.

### BRIEF DESCRIPTION OF DRAWINGS

[FIG. 1] A graph showing a correlation between a hydrogen gas concentration (% by volume) in a reducing gas and a reduction degree(%) of reduced iron (DRI) for each temperature of the reducing gas.
[FIG. 2] A schematic diagram showing a configuration of an apparatus for producing reduced iron according to a first embodiment.
[FIG. 3] A schematic diagram showing a configuration of an apparatus for producing reduced iron according to a second embodiment.
[FIG. 4] A graph showing a correlation between a preheating temperature of a feed gas and a partial combustion rate of the feed gas.
[FIG. 5] A schematic diagram showing a configuration of an apparatus for producing reduced iron according to a third embodiment.

### DESCRIPTION OF EMBODIMENTS

Hereinafter, preferred embodiments of the present invention will be described in detail with reference to the accompanying drawings.

### <1. Findings by Present Inventors>

First, the knowledge of the present inventors, which is the basis of the present embodiment, will be described. The present inventors have studied a correlation between a water vapor concentration (% by volume) in a reducing gas and a reduction degree (%) of reduced iron. Specific studies were carried out by simulation using a mathematical model of a shaft furnace. The model is a model that has been constructed based on a chemical engineering method described in non-patent documents (for example, Hara et al., Tetsu-to-Hagané, Vol. 62 (1976), No. 3, p. 315; Yamaoka et al., Tetsu-to-Hagané, Vol. 74 (1988), No. 12, p. 2254), and that is capable of theoretically analyzing and estimating heat and mass transfer within a shaft furnace, such as a chemical reaction including a reduction reaction of an iron oxide raw material by a reducing gas and a heat transfer phenomenon. Using the mathematical model, a shaft furnace operation using a reducing gas containing hydrogen gas at a high concentration was simulated, and macroscopic heat and mass transfer was evaluated.

Calculation conditions are as shown in Table 1.

In the present calculation, the reducing gas consists of hydrogen gas.

Staying time in Table 1 is a time for which the iron oxide raw material charged from a furnace top stays in a region (a region in which the iron oxide raw material is reduced by the reducing gas) where the iron oxide raw material comes into contact with the reducing gas. Specifically, the region is a region between a reducing gas blowing port and a furnace top charging position. Gas flow rate is a total flow rate of the reducing gas and water vapor rising in the shaft furnace. Here, a value per ton of reduced iron is shown. The gas flow rate may vary depending on a reduction degree or the like. Furnace top pressure indicates a pressure at the furnace top of the shaft furnace. Raw material particle size indicates a particle size (mm) of the iron oxide raw material. The particle size can be measured by sieving. Porosity is a ratio of, to an apparent volume of a raw material pellet particle, a pore volume in the particle, and a measurement method thereof is defined in JIS M 8716:1990. Hydrogen reduction rate constant represents a rate of the reduction reaction by hydrogen, and is defined by a movement speed (m/s) of a reaction interface within the particle per unit time. In a case where a hydrogen gas concentration in the reducing gas is less than 100% by volume, the gas other than hydrogen gas is assumed to be water vapor. Therefore, assuming an actual machine, hydrogen gas as a feed gas is partially combusted to set a temperature of the reducing gas to a desired temperature. However, in a case where a heating temperature is insufficient by only the partial combustion, the heating temperature may be achieved by a separate heating furnace or a heat exchanger using sensible heat contained in exhaust gas. The temperature of the reducing gas is 800°C or higher. This is because, in a case where the temperature of the reducing gas is lower than 800°C, a time required to obtain a reduction degree of 80% or more or 92% (described later) or more as a target value is long, and production efficiency decreases.

The staying time, gas flow rate, furnace top pressure, raw material particle size, and porosity are set in the above ranges because the above ranges are preferable ranges for obtaining a high reduction degree.

**[Table 1]**

| Calculation conditions | |
|---|---|
| Staying time | 40 minutes or longer |
| Gas flow rate | 1200 to 2400 Nm³/t-DRI |
| Furnace top pressure | Normal pressure |
| Raw material particle size | 10 to 20 mm |
| Porosity | 20 to 30% |
| Hydrogen reduction rate constant | Described in non-patent documents |

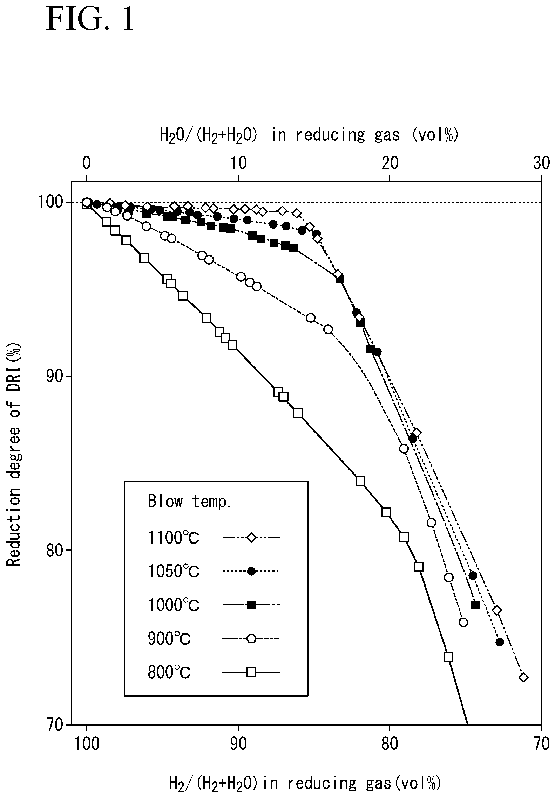

FIG. 1 shows the results of the simulation.

The horizontal axis of FIG. 1 represents the hydrogen gas concentration (% by volume) in the reducing gas (displayed on the lower side) and the water vapor concentration (% by volume) in the reducing gas (displayed on the upper side). In the present simulation, in a case where the hydrogen gas concentration in the reducing gas is less than 100% by volume, the gas other than hydrogen gas is assumed to be water vapor. Therefore, a denominator of a calculation expression of the hydrogen gas concentration is the sum of a volume of hydrogen gas and a volume of water vapor, and a value obtained by subtracting a numerical value of the horizontal axis from 100 is the water vapor concentration (% by volume) in the reducing gas.

The vertical axis represents the reduction degree of reduced iron. The reduction degree is a value of (mass of oxygen removed from iron oxide by hydrogen in the reduced iron / mass of oxygen in iron oxide originally present in the raw material), expressed as %.

On the other hand, a lower limit of the target of the reduction degree of reduced iron used as a raw material for a blast furnace is 80%. This is because, in a case where the reduction degree is less than 80%, an effect of improving a reduction material ratio or a production amount of the blast furnace is reduced.

As can be seen from FIG. 1, the water vapor concentration required to achieve a reduction degree of 80% or more varies depending on the temperature of the reducing gas. Specifically, in a case where the temperature (temperature during blowing) of the reducing gas is 800°C or higher and lower than 900°C, it is necessary to set the water vapor concentration to 21% by volume or less in order to achieve a reduction degree of 80% or more. In a case where the temperature of the reducing gas is 900°C or higher and lower than 1,000°C, it is necessary to set the water vapor concentration to 23% by volume or less in order to achieve a reduction degree of 80% or more. In a case where the temperature of the reducing gas is 1,000°C or higher, it is necessary to set the water vapor concentration to 24% by volume or less in order to achieve a reduction degree of 80% or more.

On the other hand, the lower limit of the target value of the reduction degree of the reduced iron used as a raw material for an electric furnace is 92%. This is because, in a case where the reduction degree is less than 92%, it is difficult to melt the reduced iron in an electric furnace in a subsequent process.

As can be seen from FIG. 1, the water vapor concentration required to set the reduction degree to 92% or more varies depending on the temperature of the reducing gas. Specifically, in a case where the temperature (temperature during blowing) of the reducing gas is 800°C or higher and lower than 900°C, it is necessary to set the water vapor concentration to 10% by volume or less in order to achieve a reduction degree of 92% or more. In a case where the temperature of the reducing gas is 900°C or higher and lower than 1,000°C, it is necessary to set the water vapor concentration to 17% by volume or less in order to achieve a reduction degree of 92% or more. In a case where the temperature of the reducing gas is 1,000°C or higher, it is necessary to set the water vapor concentration to 19% by volume or less in order to achieve a reduction degree of 92% or more.

When the water vapor concentration is more than 10% by volume in a case where the temperature of the reducing gas is 800°C or higher and lower than 900°C, when the water vapor concentration is more than 17% by volume in a case where the temperature of the reducing gas is 900°C or higher and lower than 1,000°C, or when the water vapor concentration is more than 19% by volume in a case where the temperature of the reducing gas is 1,000°C or higher, the reduction degree decreases, and in a case where the calculation conditions of Table 1 are assumed, the reduction degree becomes less than 92%.

An upper limit of the target value of the reduction degree is not particularly limited, but is preferably 95% in a case of being used for either a blast furnace or an electric furnace. This is because, in a case where the reduction degree is more than 95%, the production efficiency of the reduced iron decreases, and the production cost increases.

As can be seen from FIG. 1, the water vapor concentration at which the reduction degree becomes 95% or less varies depending on the temperature of the reducing gas. Specifically, in a case where the temperature of the reducing gas is 800°C or higher and lower than 900°C, the water vapor concentration may be set to 6% by volume or more in order to achieve a reduction degree of 95% or less. In a case where the temperature of the reducing gas is 900°C or higher and lower than 1,000°C, the water vapor concentration may be set to 11% by volume or more in order to achieve a reduction degree of 95% or less. In a case where the temperature of the reducing gas is 1,000°C or higher, the water vapor concentration may be set to 17% by volume or more in order to achieve a reduction degree of 95% or less.

The above is summarized as shown in Table 2.

**[Table 2]**

| Reduction degree | Temperature of reducing gas | Water vapor concentration of reducing gas |
|---|---|---|
| 80% or more | 800°C or higher and lower than 900°C | 21% by volume or less |
| | 900°C or higher and lower than 1,000°C | 23% by volume or less |
| | 1,000°C or higher | 24% by volume or less |
| 92% or more | 800°C or higher and lower than 900°C | 10% by volume or less |
| | 900°C or higher and lower than 1,000°C | 17% by volume or less |
| | 1,000°C or higher | 19% by volume or less |
| 95% or less | 800°C or higher and lower than 900°C | 6% by volume or more |
| | 900°C or higher and lower than 1,000°C | 11% by volume or more |
| | 1,000°C or higher | 17% by volume or more |

As described above, the present inventors have found that it is possible to specify a range of the water vapor concentration that does not cause a practical problem (that is, a range of the water vapor concentration at which the target reduction degree can be obtained) for each temperature of the reducing gas. By designing the operation within such a temperature range and a water vapor concentration range of the reducing gas, a load of preheating and heating the feed gas can be reduced. As shown in FIG. 1, in a case where the relationship between the water vapor concentration in terms of volume ratio of hydrogen gas and water vapor in the reducing gas and the reduction degree is obtained for each temperature of the reducing gas, the water vapor concentration can be controlled according to the reduction degree as the target and the temperature of the reducing gas during the operation, and the temperature of the reducing gas can be controlled according to the reduction degree as the target and the water vapor concentration.

The method of producing reduced iron according to the present embodiment has been made based on the above knowledge.

### <2. First Embodiment>

### (2-1. Apparatus for Producing Reduced Iron)

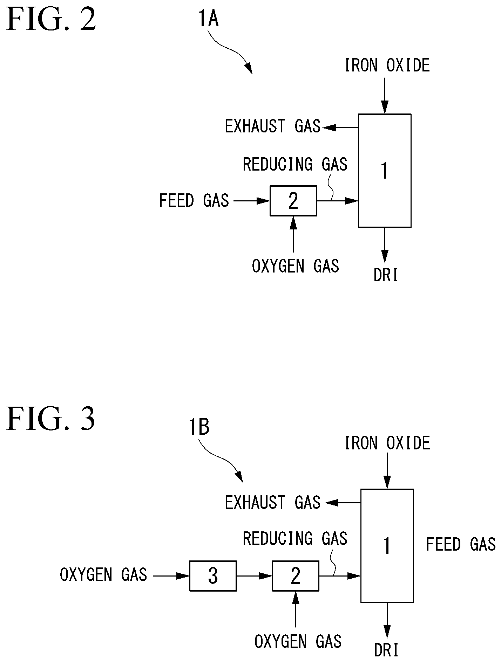

Next, a first embodiment will be described. As shown in FIG. 2, an apparatus 1A for producing reduced iron according to the first embodiment includes a shaft furnace 1 and a heating furnace 2. The shaft furnace 1 is the same as in the related art. That is, an iron oxide raw material is charged from an upper side of the shaft furnace 1. The type of the iron oxide raw material is not particularly limited, and may be the same as in an existing shaft furnace operation. Examples of the iron oxide raw material include iron oxide pellets.

On the other hand, a reducing gas obtained by partially combusting a feed gas is blown into the shaft furnace 1 from a side of a lower part (for example, in a case where the shaft furnace has a reduction zone, a transition zone, and a cooling zone in this order from a furnace top, a position corresponding to the cooling zone) of the shaft furnace 1. The reducing gas blown into the shaft furnace 1 reduces the iron oxide raw material in the shaft furnace 1 while rising in the shaft furnace 1. As a result, reduced iron (DRI) is generated.

The generated reduced iron is discharged from the lower part of the shaft furnace 1 and is cooled. On the other hand, a top gas (exhaust gas) is discharged from the furnace top of the shaft furnace 1. The exhaust gas contains water vapor, dust, and the like in addition to unreacted hydrogen gas.

The feed gas and oxygen gas are introduced into the heating furnace 2. The feed gas is a gas containing hydrogen gas (natural gas, top gas, hydrogen gas, or the like). The feed gas preferably contains hydrogen gas as a main component (for example, 90% by volume or more of hydrogen gas and 10% by volume or less of gases other than hydrogen gas, 95% by volume or more of hydrogen gas and 5% by volume or less of gases other than hydrogen gas, or 99% by volume or more of hydrogen gas and 1% by volume or less of gases other than hydrogen gas), and more preferably consists of hydrogen gas. Examples of the gases other than hydrogen gas contained in the feed gas include CO gas, CO₂ gas, and CH₄ gas. As the hydrogen gas as the feed gas, for example, hydrogen gas obtained by separating hydrogen from electrolytic hydrogen gas, coke oven gas (COG), or a gas obtained by a water-gas shift reaction using a PSA method or a membrane separation method may be used.

In the heating furnace 2, the feed gas is partially combusted using oxygen gas. Specifically, the heating furnace 2 mainly partially combusts the hydrogen gas in the feed gas. As a result, the heating furnace 2 heats the feed gas and generates the reducing gas. Here, in the present embodiment, partial combustion means that, in a case where the feed gas reacts with oxygen, 40% by mass or more of H₂ gas or CO gas remain in the feed gas.

The heating furnace 2 heats the feed gas to at least 800°C or higher. Here, as described above, in order to achieve a reduction degree of the reduced iron of 80% or more or 92% or more, it is necessary to set the water vapor concentration to a value within a predetermined range according to the temperature range of the reducing gas or to set the temperature of the reducing gas to a value within a predetermined range according to the water vapor concentration range.

The heating furnace 2 and the shaft furnace 1 are connected by a pipe, and the reducing gas is blown into the shaft furnace 1 through the pipe.

Here, the temperature of the reducing gas is measured by, for example, a thermocouple. The thermocouple is provided at a connecting portion between the above-described pipe and the shaft furnace 1, and the temperature of the reducing gas is measured using the thermocouple. The water vapor concentration is obtained by (volume of water vapor/volume of reducing gas) × 100 (% by volume). Since water vapor is generated by the chemical reaction shown by the following chemical formula, the volume of water vapor is obtained as 2 × the volume of oxygen gas.

2H₂ + O₂ → 2H₂O

The volume of oxygen gas is measured by providing a flowmeter (mass flowmeter or the like) in a pipe for oxygen gas connected to the heating furnace 2. The volume of the reducing gas is derived by the following expression from the volume of the feed gas (heating furnace inlet gas amount) introduced into the heating furnace 2, which is measured by a flowmeter, and the volume of the oxygen gas. 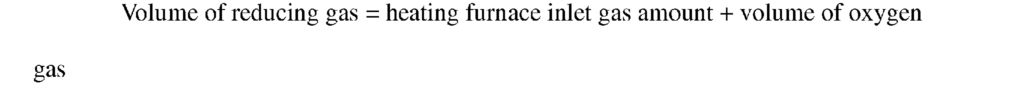 Volume of reducing gas = heating furnace inlet gas amount + volume of oxygen gas

The oxygen gas may be heated by a separate heating unit (heater or the like) provided in the heating furnace 2 or may be heated by heat exchange with the exhaust gas.

### (2-2. Method of Producing Reduced Iron)

Next, a method of producing reduced iron (method of producing reduced iron according to the first embodiment) using the apparatus 1A for producing reduced iron will be described. The method of producing reduced iron according to the first embodiment includes an iron oxide charging process of charging the iron oxide raw material into the shaft furnace 1, a partial combustion process of partially combusting the feed gas with oxygen gas in the heating furnace 2 to raise the temperature of the feed gas to 800°C or higher and to generate the reducing gas, and a blowing process of blowing the reducing gas into the shaft furnace 1.

Here, in a case of controlling the water vapor concentration according to the temperature of the reducing gas, the water vapor concentration of the reducing gas is set to 21% by volume or less in a case where the temperature of the reducing gas is 800°C or higher and lower than 900°C, the water vapor concentration of the reducing gas is set to 23% by volume or less in a case where the temperature of the reducing gas is 900°C or higher and lower than 1,000°C, and the water vapor concentration of the reducing gas is set to 24% by volume or less in a case where the temperature of the reducing gas is 1,000°C or higher.

On the other hand, in a case of controlling the temperature of the reducing gas according to the water vapor concentration, the temperature of the reducing gas is set to 800°C or higher (preferably lower than 900°C) in a case where the water vapor concentration of the reducing gas is 21% by volume or less, the temperature of the reducing gas is set to 900°C or higher (preferably lower than 1,000°C) in a case where the water vapor concentration of the reducing gas is 23% by volume or less, and the temperature of the reducing gas is set to 1,000°C or higher in a case where the water vapor concentration of the reducing gas is 24% by volume or less.

As a result, the reduction degree of the reduced iron can be 80% or more.

On the other hand, in order to achieve a reduction degree of the reduced iron of 92% or more, in a case of controlling the water vapor concentration according to the temperature of the reducing gas, it is preferable to set the water vapor concentration of the reducing gas to 10% by volume or less in a case where the temperature of the reducing gas is 800°C or higher and lower than 900°C, set the water vapor concentration of the reducing gas to 17% by volume or less in a case where the temperature of the reducing gas is 900°C or higher and lower than 1,000°C, and set the water vapor concentration of the reducing gas to 19% by volume or less in a case where the temperature of the reducing gas is 1,000°C or higher.

On the other hand, in a case of controlling the temperature of the reducing gas according to the water vapor concentration, it is preferable to set the temperature of the reducing gas to 800°C or higher (preferably lower than 900°C) in a case where the water vapor concentration of the reducing gas is 10% by volume or less, set the temperature of the reducing gas to 900°C or higher (preferably lower than 1,000°C) in a case where the water vapor concentration of the reducing gas is 17% by volume or less, and set the temperature of the reducing gas to 1,000°C or higher in a case where the water vapor concentration of the reducing gas is 19% by volume or less.

It is preferable to set the water vapor concentration to 6% or more in a case where the temperature of the reducing gas is 800°C or higher and lower than 900°C, set the water vapor concentration to 11% or more in a case where the temperature of the reducing gas is 900°C or higher and lower than 1,000°C, and set the water vapor concentration to 17% or more in a case where the temperature of the reducing gas is 1,000°C or higher. As a result, the reduction degree of the reduced iron can be 95% or less.

The reduction degree of the reduced iron can be set to 95% or less by controlling the temperature of the reducing gas according to the water vapor concentration.

The upper limit of the temperature of the reducing gas is not particularly limited, and may be appropriately adjusted according to performance of the shaft furnace 1, but may be, for example, 1,150°C.

In the operation, the water vapor concentration can be controlled by a mixing ratio of hydrogen gas and oxygen gas in the feed gas introduced into the heating furnace 2. The temperature of the reducing gas can be controlled by the mixing ratio of hydrogen gas and oxygen gas in the feed gas introduced into the heating furnace 2 and by preheating the feed gas as described later.

In the shaft furnace 1, as described above, the iron oxide raw material is reduced to generate reduced iron. The reduced iron is discharged from the lower part of the shaft furnace 1 and cooled. On the other hand, a top gas (exhaust gas) is discharged from the furnace top of the shaft furnace 1. The exhaust gas contains water vapor, dust, and the like in addition to unreacted hydrogen gas.

In the apparatus 1A for producing reduced iron used in the present embodiment, the heating furnace is configured such that the feed gas is directly supplied from a feed gas supply source (outside the system and not shown) through the pipe. In other words, the apparatus 1A for producing reduced iron does not have a preheating furnace unlike apparatuses 1 B and 1C for producing reduced iron used in embodiments described later.

Therefore, in the method of producing reduced iron according to the present embodiment, the feed gas at 100°C or lower is partially combusted with the oxygen gas without being preheated to be raised to a temperature at which a sufficient reduction degree is obtained.

As a result of the studies of the present inventors, in a case where a feed gas mainly containing natural gas is used, a sufficient reduction degree cannot be obtained by only the partial combustion; however, it has been found that, in a case where a gas mainly containing hydrogen or consisting of hydrogen gas is used as the feed gas, a sufficient reduction degree can be obtained by only the partial combustion. This is because a reduction reaction by natural gas is a reduction reaction by both carbon monoxide and hydrogen generated in a furnace, while a reduction reaction by carbon monoxide is an exothermic reaction, and thus the reduction reaction does not proceed as the temperature is higher and the concentration of carbon dioxide or water vapor generated by the partial combustion is higher. On the other hand, it is considered that, since a reduction reaction by hydrogen is an endothermic reaction, the reduction reaction proceeds even in a case where the water vapor concentration is high as the temperature is higher.

As a result of specific studies, Table 3 shows a relationship among a temperature of the reducing gas, a water vapor concentration, and a reduction degree of the obtained reduced iron in a case where hydrogen gas is used as the feed gas and the temperature of the reducing gas is raised by only the partial heating with oxygen. In this case, the water vapor concentration is a numerical value equal to the concentration of hydrogen consumed. The calculation method of Table 3 is as described above.

**[Table 3]**

| Reducing gas | | Reduced iron |
|---|---|---|
| Water vapor concentration % by volume | Temperature °C | Reduction degree % |
| 11 | 897 | 81.3 |
| 12 | 969 | 92.9 |
| 13 | 1040 | 98.9 |
| 14 | 1109 | 99.7 |
| 15 | 1177 | 100.0 |

As can be seen from Table 3, it is found that in order to produce reduced iron having a reduction degree of 80% or more, which is used as a raw material for a blast furnace, it is sufficient to raise the temperature of the feed gas to 897°C or higher by partial combustion (the reducing gas may be set to 897°C or higher). In this case, the water vapor concentration of the reducing gas is 11% by volume or more. On the other hand, it is found that, in order to produce reduced iron having a reduction degree of 92% or more, which is used as a raw material for an electric furnace, it is sufficient to raise the temperature of the feed gas to 969°C or higher by partial combustion (the reducing gas may be set to 969°C or higher). In this case, the water vapor concentration of the reducing gas is 12% by volume or more.

As described above, according to the method of producing reduced iron according to the first embodiment using the apparatus 1A for producing reduced iron, in a case where the gas mainly containing hydrogen is used as the feed gas, reduced iron having a high reduction degree can be produced only by the partial combustion process of partially combusting the feed gas with oxygen gas even without a preheating process of preheating the feed gas.

### <3. Second Embodiment>

### (3-1. Apparatus for Producing Reduced Iron)

Next, a second embodiment will be described. As shown in FIG. 3, an apparatus 1B for producing reduced iron according to the second embodiment is obtained by adding a preheating furnace 3 to the apparatus 1A for producing reduced iron according to the first embodiment.

The feed gas is introduced into the preheating furnace 3. A composition of the feed gas is the same as in the first embodiment. In the preheating furnace 3, the feed gas is preheated. The preheated feed gas is introduced into the heating furnace 2. The preheating furnace 3 includes any heating unit (for example, a heater) for preheating the feed gas. The preheating temperature is not particularly limited, but is preferably lower than the temperature of the reducing gas when the reducing gas is blown into the shaft furnace 1 in consideration of the fact that the feed gas is heated (partially combusted) in the preheating furnace 3.

Oxygen gas and the preheated feed gas are introduced into the heating furnace 2. As in the first embodiment, the heating furnace 2 partially combusts the feed gas using the oxygen gas. Specifically, the heating furnace 2 mainly partially combusts the hydrogen gas in the feed gas. As a result, the feed gas is heated in the heating furnace 2 to generate the reducing gas. In the heating furnace 2, the feed gas is heated to at least 800°C or higher. As in the first embodiment, in the heating furnace 2, the water vapor concentration is set to a value within a predetermined range according to the temperature range of the reducing gas or the temperature of the reducing gas is set to a value within a predetermined range according to the water vapor concentration.

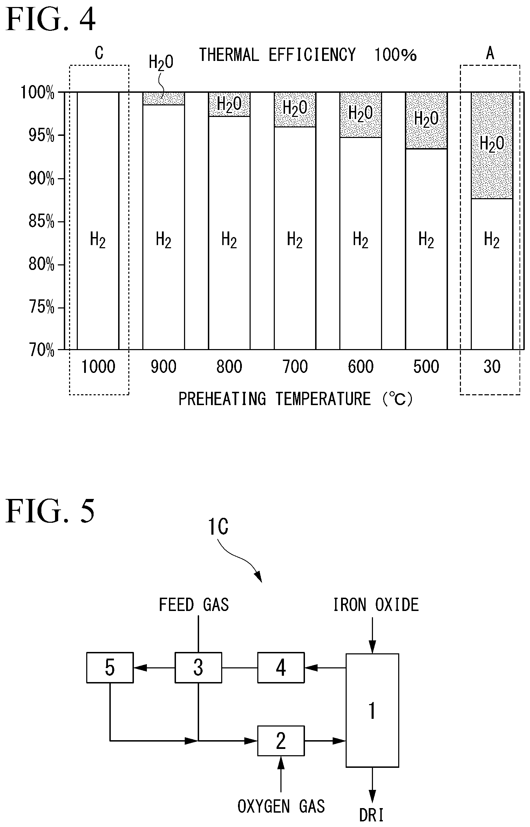

Furthermore, in the second embodiment, the feed gas introduced into the heating furnace 2 is preheated. Therefore, a partial combustion rate of the feed gas (the water vapor concentration in the reducing gas) varies depending on the degree to which the feed gas is preheated. FIG. 4 shows a correlation between a preheating temperature (°C) of the feed gas and a hydrogen gas concentration and a water vapor concentration (% by volume) in the reducing gas in a case where the feed gas is hydrogen gas. In FIG. 4, a thermal efficiency is set to 100%, and the temperature of the reducing gas is set to 1,000°C. Region A indicates the partial combustion rate of the feed gas in a case where the feed gas is not preheated, and region C indicates the partial combustion rate (0% by volume) of the feed gas in a case where the feed gas is preheated to 1,000°C. As is clear from FIG. 4, the higher the preheating temperature of the feed gas is, the lower the partial combustion rate of the feed gas is. That is, a heating load in the heating furnace 2 is reduced.

### (3-2. Method of Producing Reduced Iron)

Next, a method of producing reduced iron (method of producing reduced iron according to the second embodiment) using the apparatus 1B for producing reduced iron will be described. The method of producing reduced iron according to the second embodiment is obtained by adding a preheating process of preheating the feed gas to the method of producing reduced iron according to the first embodiment. In the partial combustion process, the preheated feed gas is partially combusted with oxygen gas. In the preheating process, the feed gas is preheated such that the partial combustion rate in the partial combustion process is more than 0% by volume.

According to the second embodiment, the same effects as those of the first embodiment can be obtained, and since the feed gas is preheated in the preheating furnace 3, the heating load of the heating furnace 2 is reduced. Therefore, the water vapor concentration in the reducing gas for setting the temperature of the reducing gas to a desired temperature can be reduced.

### <4. Third Embodiment>

### (4-1. Apparatus for Producing Reduced Iron)

Next, a third embodiment will be described. As shown in FIG. 5, an apparatus 1C for producing reduced iron according to the third embodiment is obtained by adding a dust removal device 4 and a dehydration device 5 to the apparatus 1B for producing reduced iron according to the second embodiment.

The exhaust gas discharged from the shaft furnace 1 is introduced into the dust removal device 4. The dust removal device 4 removes dust and the like in the exhaust gas by any dust removal unit (dust removal filter) or the like. Furthermore, CO₂ gas in the exhaust gas is removed by a chemical adsorption method or the like. Thereafter, the exhaust gas is introduced into the preheating furnace 3. The preheating furnace 3 is a heat exchanger, and the feed gas introduced into the preheating furnace 3 is preheated by sensible heat contained in the exhaust gas. Thereafter, the feed gas is introduced into the heating furnace 2, and the exhaust gas is introduced into the dehydration device 5. The dehydration device 5 removes water vapor in the exhaust gas as liquid water by cooling the exhaust gas (that is, dehydrates the exhaust gas). As a result, the exhaust gas mainly contains hydrogen gas (and may contain CO gas, N₂ gas, or the like depending on the case). This gas is introduced into the heating furnace 2.

The preheated feed gas, the hydrogen gas recovered from the exhaust gas, and oxygen gas (at room temperature) are introduced into the heating furnace 2 (CO gas, N₂ gas, and the like in the exhaust gas may be simultaneously introduced). As in the first embodiment, in the heating furnace 2, the feed gas and the like (hydrogen gas recovered from the feed gas and the exhaust gas) is partially combusted using the oxygen gas. As a result, the reducing gas is generated in the heating furnace 2. In the heating furnace 2, the feed gas or the like is heated to at least 800°C or higher. As in the first embodiment, in the heating furnace 2, the water vapor concentration is set to a value within a predetermined range according to the temperature range of the reducing gas or the temperature of the reducing gas is set to a value within a predetermined range according to the water vapor concentration.

### (4-2. Method of Producing Reduced Iron)

Next, a method of producing reduced iron (method of producing reduced iron according to the third embodiment) using the apparatus 1C for producing reduced iron will be described. The method of producing reduced iron according to the third embodiment is obtained by changing the preheating process according to the second embodiment and further adding an exhaust gas circulation process.

In the exhaust gas circulation process, the exhaust gas discharged from the shaft furnace 1 is subjected to dust removal by the dust removal device 4, the exhaust gas subjected to the dust removal is introduced into the preheating furnace 3 to preheat the feed gas using sensible heat (that is, the preheating process is performed), and then the exhaust gas is introduced into the dehydration device 5 to dehydrate the exhaust gas. The hydrogen gas thus obtained is introduced into the heating furnace 2.

According to the third embodiment, the same effects as those of the first and second embodiments can be obtained. In addition, since the feed gas is preheated using the sensible heat of the exhaust gas and furthermore, the hydrogen gas in the exhaust gas is reused, the thermal efficiency of the entire system can be increased, and the amount of hydrogen gas consumed can be reduced.

The preferred embodiments of the present invention have been described in detail above. However, the present invention is not limited to these examples. It is evident that a person skilled in the art of the present invention is able to conceive a variety of modification examples or correction examples within the scope of the technical concept described in the claims, and it is needless to say that such examples are also understood to be in the technical scope of the present invention.

### INDUSTRIAL APPLICABILITY

According to the present invention, it is possible to provide a method of producing reduced iron capable of producing reduced iron having a high reduction degree even in a case where hydrogen gas is partially combusted, and therefore the present invention has high industrial applicability.

### REFERENCE SIGNS LIST

1 Shaft furnace
2 Heating furnace
3 Preheating furnace
4 Dust removal device
5 Dehydration device
1A, 1B, 1C Apparatus for producing reduced iron

## Claims

1. A method of producing reduced iron, the method comprising:
an iron oxide charging process of charging an iron oxide raw material into a shaft furnace;
a partial combustion process of partially combusting a feed gas with oxygen gas to raise a temperature of the feed gas to 800°C or higher and to generate a reducing gas; and
a blowing process of blowing the reducing gas into the shaft furnace,
wherein, in the blowing process,
in a case where a temperature of the reducing gas after the partial combustion process is 800°C or higher and lower than 900°C, a water vapor concentration of the reducing gas is set to 21 % by volume or less,
in a case where the temperature of the reducing gas after the partial combustion process is 900°C or higher and lower than 1,000°C, the water vapor concentration of the reducing gas is set to 23% by volume or less, and
in a case where the temperature of the reducing gas after the partial combustion process is 1,000°C or higher, the water vapor concentration of the reducing gas is set to 24% by volume or less.

2. The method of producing reduced iron according to Claim **1,**
wherein, in the blowing process,
in a case where the temperature of the reducing gas after the partial combustion process is 800°C or higher and lower than 900°C, the water vapor concentration of the reducing gas is set to 10% by volume or less,
in a case where the temperature of the reducing gas after the partial combustion process is 900°C or higher and lower than 1,000°C, the water vapor concentration of the reducing gas is set to 17% by volume or less, and
in a case where the temperature of the reducing gas after the partial combustion process is 1,000°C or higher, the water vapor concentration of the reducing gas is set to 19% by volume or less.

3. The method of producing reduced iron according to Claim 1,
wherein the feed gas contains hydrogen gas as a main component.

4. The method of producing reduced iron according to Claim 2,
wherein the feed gas contains hydrogen gas as a main component.

5. The method of producing reduced iron according to any one of Claims 1 to 4,
wherein, in the partial combustion process, the feed gas and the oxygen gas are introduced into a heating furnace, and the feed gas is partially combusted in the heating furnace.

6. The method of producing reduced iron according to Claim 3 or 4,
wherein, in the partial combustion process, the feed gas at 100°C or lower is partially combusted with the oxygen gas to raise the temperature of the feed gas to 897°C or higher.

7. The method of producing reduced iron according to Claim 3 or 4,
wherein, in the partial combustion process, the feed gas at 100°C or lower is partially combusted with the oxygen gas to raise the temperature of the feed gas to 969°C or higher.

8. The method of producing reduced iron according to any one of Claims 1 to 4, further comprising:
a preheating process of preheating the feed gas,
wherein, in the partial combustion process, the preheated feed gas is partially combusted with the oxygen gas.

9. The method of producing reduced iron according to Claim 8,
wherein, in the preheating process, the feed gas is preheated using sensible heat contained in an exhaust gas of the shaft furnace.

10. The method of producing reduced iron according to Claim 9, further comprising:
a circulation process of introducing hydrogen gas obtained by dehydrating the exhaust gas after the preheating process into a heating furnace.

11. A method of producing reduced iron, the method comprising:
an iron oxide charging process of charging an iron oxide raw material into a shaft furnace;
a partial combustion process of partially combusting a feed gas with oxygen gas to raise a temperature of the feed gas to 800°C or higher and to generate a reducing gas; and
a blowing process of blowing the reducing gas into the shaft furnace,
wherein a relationship between a water vapor concentration, which is a concentration of water vapor in terms of a volume ratio in hydrogen gas and the water vapor in the reducing gas, and a reduction degree of reduced iron is obtained for each temperature of the reducing gas, and
the water vapor concentration is controlled according to the reduction degree as a target and the temperature of the reducing gas based on the relationship, or
the temperature of the reducing gas is controlled according to the reduction degree as a target and the water vapor concentration based on the relationship.

12. An apparatus for producing reduced iron using the method of producing reduced iron according to Claim 6, the apparatus comprising:
a heating furnace connected to a pipe and configured to heat and partially combust the introduced feed gas and the oxygen gas to obtain the reducing gas; and
the shaft furnace into which the reducing gas obtained in the heating furnace is blown,
wherein the heating furnace is configured such that the feed gas is directly supplied from a feed gas supply source through the pipe.
